Europäisches Patentamt

European Patent Office

Office européen des brevets

(19)

(11) Veröffentlichungsnummer: **0 043 895**
**B1**

# (12) EUROPÄISCHE PATENTSCHRIFT

(45) Veröffentlichungstag der Patentschrift:
23.09.87

(21) Anmeldenummer: 81102993.3

(22) Anmeldetag: 18.04.81

(51) Int. Cl.⁴: **B 60 T 17/22**

(54) **Zugfahrzeug mit Antiblockiersystem.**

(30) Priorität: 26.06.80 DE 3023933

(43) Veröffentlichungstag der Anmeldung:
20.01.82 Patentblatt 82/3

(45) Bekanntmachung des Hinweises auf die Patenterteilung:
23.09.87 Patentblatt 87/39

(84) Benannte Vertragsstaaten:
AT DE FR GB NL SE

(56) Entgegenhaltungen:
AU-B-500 981
FR-A-2 176 155

(73) Patentinhaber: WABCO Westinghouse
Fahrzeugbremsen GmbH, Am Lindener Hafen 21
Postfach 91 12 80, D-3000 Hannover 91 (DE)

(72) Erfinder: Petersen, Erwin, Dr., Fliederweg 22,
D-3050 Wunstorf (DE)

(74) Vertreter: Schrödter, Manfred, WABCO
Westinghouse Fahrzeugbremsen GmbH Am
Lindener Hafen 21 Postfach 91 12 80, D-3000
Hannover 91 (DE)

EP 0 043 895 B1

## Beschreibung

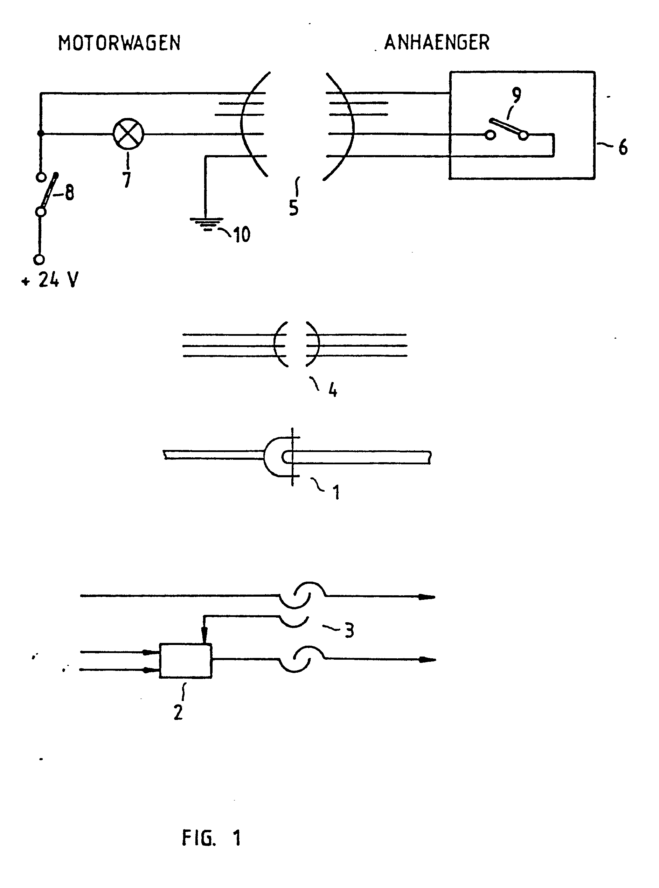

Die Erfindung bezieht sich auf ein Zugfahrzeug mit einem Antiblockiersystem gemäß dem Oberbegriff des Patentanspruchs 1 (gemäß Fig.1).

Die Einführung von Antiblockiersystemen in Nutzfahrzeugen ist in den nächsten Jahren zu erwarten. Voraussichtlich wird das Antiblockiersystem zunächst für schnelle Reisebusse und schwere Sattelzüge angeboten werden, insbesondere für den Transport gefährlicher Güter. Anschließend werden Lastzüge folgen.

Bei Lastzügen mit Zugfahrzeug und Anhänger bzw. Auflieger haben in der Regel Anhänger bzw. Auflieger eine längere Lebensdauer als das Zugfahrzeug. Wenn bei der Einführung von Antiblockiersystemen bei den erwähnten Lastzügen nur vereinzelt auch die Anhänger nachgerüstet werden, werden gerade in der Einführungsphase häufig Zugfahrzeuge, die mit einem Antiblockiersystem ausgerüstet sind, im Wechselbetrieb auch mit herkömmlichen Anhängern oder Aufliegern ohne Antiblockiersystem kombiniert fahren. Bei einer solchen Fahrzeugkombination kann es zu einem Bremsverhalten kommen, das besonders dann den Fahrer überfordern könnte, wenn dieser sich an das Fahren von vollbremsgeregelten Lastzügen gewöhnt hat. So ist es nicht ausgeschlossen, daß der Ahhänger mit blockierenden Rädern seitlich ausbrechen kann.

Um diese Gefahr zu vermeiden, könnte man daran denken, bei der erwähnten Fahrzeugkombination entweder nur die Hinterachse des Zugfahrzeugs bzw. Motorwagens mit einem Antiblockiersystem auszurüsten, oder das Motorwagen-Allrad-Antiblockiersystem komplett auszuschalten, wenn ein ungeregelter Anhänger angekuppelt ist, oder bei einem Motorwagen-Allrad-Antiblockiersystem die Vorderachsregelung auszuschalten, wenn ein ungeregelter Anhänger angekuppelt ist.

In allen drei Fällen soll der Fahrer über ein Blockieren der gelenkten Vorderrräder und der dadurch fehlenden Seitenführungskräfte Rückschlüsse auf die anderen Räder des Lastzuges und damit auch auf die Anhänger-Räder ziehen. Nachteilig ist jedoch, daß in dem zuletzt erwähnten Fall auf die in verschiedenen Bremsmanövern sonst vom antiblockiersystem gesicherte Lenkfähigkeit und beim zweiten Fall auch auf die Stabilität des Zugwagens verzichtet wird. Der Wert dieser Maßnahmen ist deshalb zweifelhaft, zumal die Warnung vor dem Blockieren der Anhänger-Räder über die fehlenden Lenkkräfte des Motorwagens gegebenenfalls sehr spät erfolgt.

Der Erfindung liegt die Aufgabe zugrunde, den Fahrer eines Lastzuges, welcher aus einem Zugfahrzeug mit Antiblockiersystem besteht, auf diesen erwähnten und im Extremfall mit Gefahren verbundenen Zustand aufmerksam zu machen, und so zu einer angemessenen Bremsbetätigung anzuhalten. Dies soll ohne zusätzliche Einrichtungen im Anhänger erfolgen, damit derartige Motorwagen mit allen heute üblichen Anhängern kompatibel sind.

Diese Aufgabe wird durch die im Patentanspruch 1 angegebene Erfindung gelöst. Die Unteransprüche enthalten zweckmäßige Ausgestaltungen der Erfindung.

Ausführungsbeispiele der Erfindung werden im folgenden anhand einer Zeichnung näher erläutert.

Die Zeichnung zeigt in:

Fig. 1 eine schematische Darstellung der nach dem Stand der Technik üblichen Verbindungen zwischen einem Motorwagen und einem Anhänger, welche beide mit einem Antiblockiersystem ausgerüstet sind,

Fig. 2 bis 4 Blockschaltbilder der erfindungsgemäßen Warneinrichtung in drei Ausführungsformen.

Gemäß Fig. 1 haben Zugwagen mit Zweileitungsdruckluftbremse und Antiblockiersystem, welche zum Ziehen von Anhängern mit einem eigenen Antiblockiersystem ausgerüstet sind, folgende Einrichtungen:

Eine mechanische Kupplung 1 für den Anhänger;

ein Anhängersteuerventil 2, das von einem Kupplungskopf 3 mit Vorratsdruckluft versorgt wird, sobald die Vorratsleitung des Anhängers gekuppelt ist, und das nur bei Bremsungen über eine Bremsleitung Bremsdruck an die Ahhängerbremsanlage durchsteuert;

eine oder zwei genormte elektrische Steckverbindungen 4 für die Versorgung der heute üblichen elektrischen Einrichtungen im Anhänger, beispielsweise des Bremslichtes;

eine zusätzliche, in Zukunft genormte elektrische Steckverbindung 5 für die Versorgung des Anhänger-Antiblockiersystems und für die Ansteuerung der im Motorwagen angeordneten Warneinrichtung 7 für das Anhänger-Antiblockiersystem.

Gemäß Fig. 1 wird die Warneinrichtung 7 des Anhänger-Antiblockiersystems von diesem im Fehlerfalle dadurch gesteuert, daß über ein Schaltelement 9, z. B. einen Transistor, eine Verbindung zur Masse 10 hergestellt wird. Ein Zündschalter 8 wird beim Starten des Fahrzeugs geschlossen. Ein Ansprechen der Warneinrichtung 7 des Anhänger-Antiblockiersystems 8 bedeutet, abgesehen von einem Leuchten zur Kontrolle beim Starten des Fahrzeugs, für den Fahrer, daß das Anhänger-Antiblockiersystem nicht einwandfrei arbeitet oder abgeschaltet ist, und er mit dem Blockieren der Anhänger-Räder beim Bremsen rechnen muß.

Gemäß der Erfindung wird nun die Warneinrichtung 7 für das Anhänger-Antiblockiersystem, welche eine Sicherheitslampe oder ein ggf. zusätzlich vorhandenes akustisches Warnelement ist, von der im folgenden beschriebenen Einrichtung angesteuert, sobald ein Blockieren der Anhänger-Räder droht.

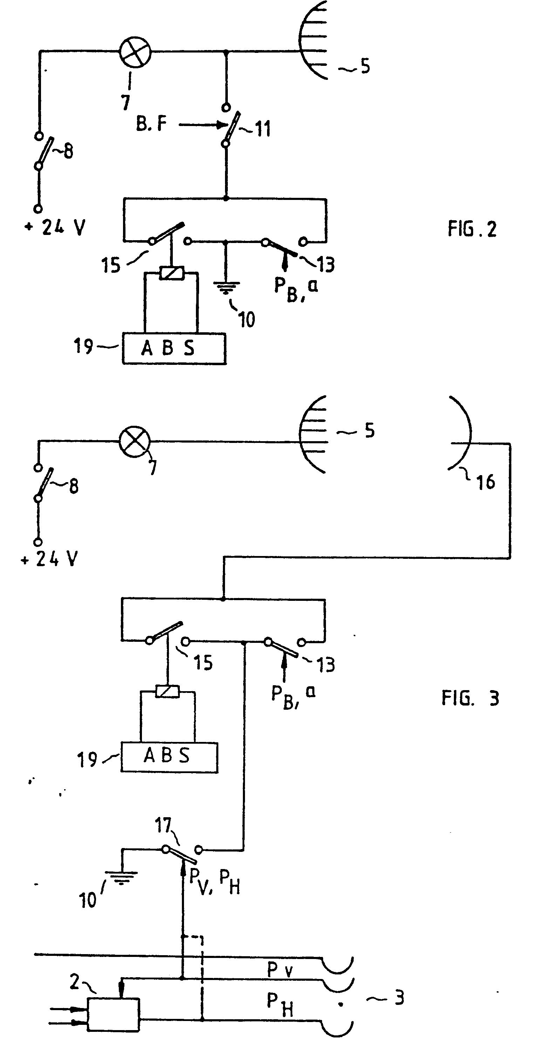

Gemäß Fig. 2 wird der Fahrer vor dem Blockieren der Räder eines Anhängers, welcher nicht mit einem Antiblockiersystem ausgerüstet ist, dann gewarnt, wenn mindestens eines der Zugwagenräder, also mindestens ein Vorder- oder Hinterrad, Blockierneigung zeigt. In diesem Fall spricht das Antiblockiersystem des Zugwagens an und erzeugt Blockierregelsignale. Diese Regelsignale, welche z. B. Druckhaltesignale sein können, werden für jeden Regelkanal mit einer ODER-Funktion (nicht dargestellt) verknüpft. Das so erzeugte gemeinsame Signal wird über einen Leistungsschalter, welcher nach Fig. 2 als Relais 15 ausgebildet ist, zur Einschaltung einer Warneinrichtung 7 verwendet. Die Warneinrichtung muß vorher durch einen Schalter 11, der vom Fahrer F geschaltet wird, aktiviert werden. An Stelle der Aktivierung durch den Fahrer kann die Warneinrichtung 7 auch automatisch durch das Ankuppeln eines Anhängers mittels eines Berührungsschalters B aktiviert werden.

Wahlweise zu den Regelsignalen des Antiblockiersystems 19 kann die Aktivierung auch durch einen Schalter 13 erfolgen, welcher dem Relais 15 parallel geschaltet ist. Der Schalter 13 wird automatisch bei einem eingestellten Wert der Fahrzeugverzögerung oder des Motorwagenbremsdruckes PB betätigt. Der Schalter 13 löst dann die Warnung aus, wenn die Zugwagenverzögerung bzw. der Bremsdruck den Wert überschreitet, bei dem die Kraftschlußausnutzung mindestens eines Anhänger-Rades die der Zugwagenräder überschreitet. Die Schaltschwelle ist zweckmäßig für verschiedene Amhänger einstellbar.

Das Ansteuern der optischen oder akustischen Warneinrichtung 7 sollte nur dann erfolgen, wenn tatsächlich ein Anhänger ohne eigenes Antiblockiersystem mitgeführt wird. Eine Aktivierung sollte dagegen nicht erfolgen, wenn das Zugfahrzeug solo fährt oder einen Anhänger mit Antiblockiersystem mitführt. Der Schalter 11 wird deshalb in an sich bekannter Weise so selbsthaltend ausgeführt, daß er aufomatisch beim Einschalten der Zündung geschlossen und vom Fahrer bewußt geöffnet werden muß, wenn der Zugwagen solo oder mit einem mit antiblockiersystem ausgerüsteten Anhänger fährt.

Gemäß Fig. 3 kann die Aktivierung der Warneinrichtung 7 durch einen auf den Stecker 5 aufgesteckten Zusatz- oder Schutzstecker 16 erfolgen. Diese Einrichtung ersetzt den Schalter 11 in der Fig. 2. Der Schutzstecker 18 ist zum Schutz der Blockierschutzkupplung immer dann auf den Stecker 5 gesteckt, wenn kein Anhänger-Blockierschutzstecker gesteckt ist.

Als weitere Möglichkeit zum Aktivieren der Warneinrichtung 7 kann im oben beschriebenen Fall der Anhängerbremssteuerung ein Druckschalter 17 dienen, welcher automatisch durch den Vorratsdruck PV oder den Bremsdruck PH des Anhängers-aktivierbar ist. Die beiden Drücke PV und PH lassen sich vom Anhängersteuerventil 2, welches im Zugwagen angeordnet ist, abgreifen. Durch den Druckschalter 17 wird der zum Betrieb der Warneinrichtung 7 notwendige Kontakt zur Masse 10 hergestellt. Dies erfolgt nur dann, wenn mit dem Anschließen eines Anhängers an den Kupplungskopf 3 (Fig. 1) der Vorratsleitung das Anhängersteuerventil 2 mit dem Vorratsdruck versorgt wird.

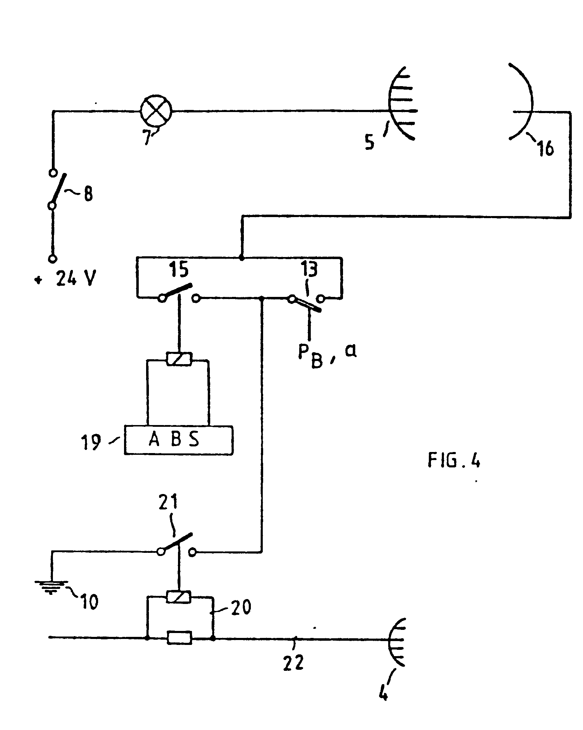

In Fig. 4 ist schließlich gezeigt, daß der Druckschalter 17 aus Fig. 3 durch ein Strommeßrelais 20, 21 ersetzt werden kann, welches in einer bei einer Bremsung stromführende Leitung 22, welche über einen Anschluß 4 zum Anhänger führt, geschaltet ist.

Die Aktivierung der Warneinrichtung 7 durch den Schalter 11 (Fig. 2), den Schutzstecker 16 (Fig. 3), den Druckschalter 17 (Fig. 3), oder das Strommeßrelais 20, 21 (Fig. 4) kann einzeln oder auch in beliebiger Kombination durchgeführt werden.

Das Warnsystem ist sinngemäß auch ausführbar, wenn die Warneinrichtung 7 nicht über das Herstellen der Masseverbindung aktiviert wird, sondern über das Durchschalten eines anderen Spannungspotentials oder das Unterbrechen eines Ruhestroms.

Dieses nur im aktuellen Bremsfall ansprechende Warnsystem ist auch kombinierbar mit anderen Warn- oder Informationseinrichtungen, beispielsweise derart, daß eine bei der entsprechenden Fahrzeugkombination dauernd leuchtende Informationslampe über das beschriebene Warnsystem mit einem erhöhten Strom versorgt oder durch ein akustisches Signal ergänzt wird. Auch ist das Warnsystem kombinierbar mit Einrichtungen, die im Falle der entsprechenden Fahrzeugkombination Teile des Motorwagen-Antiblockiersystems abschalten oder in ihrer Funktion verändern.

**Patentansprüche**

1. Zugfahrzeug mit Antiblockiersystem, mit einer im Führerhaus angebrachten optischen und/oder akustischen Warneinrichtung (7), welche anzeigt, daß an den Motorwagen ein Anhänger oder Auflieger ohne Antiblockiersystem oder mit defektem Antiblockiersystem (6) angekuppelt ist, dadurch gekennzeichnet, daß die Warneinrichtung (7) nur dann aktiviert wird, wenn entweder das Antiblockiersystem (19) des Motorwagens arbeitet oder der Motorwagenbremsdruck ($P_B$) oder die Motorwagenverzögerung (a) einen einstellbaren Wert übersteigt, und wenn gleichzeitig ein zwischen der Warneinrichtung (7) und den Regelsignalausgängen eingebauter, zweiter Schalter (11) geschlossen ist, der entweder vom Fahrer (F) betätigbar ist oder als Berührungs- oder Näherungsschalter (B) in einer Kupplungsvorrichtung (1, 2, 4, 5) zwischen Motorwagen und Anhänger eingebaut ist, wodurch die Warneinrichtung (7) automatisch durch das Ankuppeln des Anhängers aktivierbar ist.

2. Zugfahrzeug nach Anspruch 1, <u>dadurch gekennzeichnet</u>, daß bei regelndem Antiblockiersystem (19) des Motorwagens ein Relais (15) eingeschaltet wird.

3. Zugfahrzeug nach Anspruch 1 und 2, <u>dadurch gekennzeichnet</u>, daß durch den Motorwagenbremsdruck ($P_B$) oder die Motorwagenverzögerung (a) ein erster Schalter (13) eingeschaltet wird, der parallel zum Relais (15) geschaltet ist.

4. Zugfahrzeug nach einem der Ansprüche 1 bis 3, <u>dadurch gekennzeichnet</u>, daß als Warneinrichtung (7) eine bereits im Führerhaus installierte Sicherheitslampe für das Antiblockiersystem (6) des Anhängers mitbenutzt wird.

5. Zugfahrzeug nach einem der Ansprüche 1 bis 4, <u>dadurch gekennzeichnet</u>, daß die Warneinrichtung (7) nur dann aktiviert wird, wenn gleichzeitig außerdem ein vom Vorratsdruck ($P_V$) oder vom Bremsdruck ($P_H$) des Anhängers einschaltbarer Druckschalter (17) betätigt ist.

6. Zugfahrzeug nach einem der Ansprüche 1 bis 4, <u>dadurch gekennzeichnet</u>, daß die Warneinrichtung (7) nur dann aktiviert wird, wenn gleichzeitig außerdem ein Strommeßrelais (20, 21), welches in eine mindestens bei einer Bremsung stromführende Leitung (22) geschaltet ist, aktiviert ist.

7. Zugfahrzeug nach Anspruch 5 oder 6, <u>dadurch gekennzeichnet</u>, daß die Aktivierung der Warneinrichtung (7) über einen Verbindungsstecker (5) und einen auf diesen aufgesteckten Schutzstecker (16) erfolgt.

8. Zugfahrzeug nach einem oder mehreren der Ansprüche 1 bis 7, <u>dadurch gekennzeichnet</u>, daß die Warneinrichtung (7) automatisch durch eine Einrichtung (B) zum Erkennen eines nicht gesteckten Verbindungssteckers (5) für das Anhänger-Antiblockiersystem (6) aktivierbar ist.

9. Zugfahrzeug nach Anspruch 8, <u>dadurch gekennzeichnet</u>, daß die Einrichtung zum Erkennen des nicht gesteckten Verbindungssteckers (5) ein im Verbindungsstecker (5) eingebauter Berührungsschalter (B) ist.

10. Zugfahrzeug nach Anspruch 8, <u>dadurch gekennzeichnet</u>, daß die Einrichtung zum Erkennen des nicht gesteckten Verbindungssteckers (5) ein Strommeßrelais ist, welches in eine zum Antiblockiersystem (6) des Anhängers führende Stromleitung geschaltet ist.

## Claims

1. Tractor vehicle having an anti-lock system, having an optical and/or acoustic warning device (7) which is mounted in the driver's cab and which indicates that a trailer or semi-trailer having no anti-lock system or having a defective anti-lock system (6) is attached to the motor vehicle, <u>characterised in that</u> the warning device (7) is activated only when either the anti-lock system (19) of the motor vehicle is operating or when the motor vehicle braking pressure ($P_B$) or the motor vehicle deceleration (a) exceeds a predeterminable value and when, at the same time, a second switch (11), installed between the warning device (7) and the control signal outputs, is closed, which switch either can be operated by the driver (F) or is installed in the form of a contact or proximity switch (B) in a coupling device (1, 2, 4, 5) between the motor vehicle and the trailer, so that the warning device (7) is activated automatically by the attachment of the trailer.

2. Tractor vehicle according to claim 1, <u>characterised in that</u> in the case of a controlling anti-lock system (19) in the motor vehicle a relay (15) is incorporated.

3. Tractor vehicle according to claim 1 and 2, <u>characterised in that</u> a first switch (13), which is connected in parallel with the relay (15), is switched on by the motor vehicle braking pressure ($P_B$) or by the motor vehicle deceleration (a).

4. Tractor vehicle according to any one of claims 1 to 3, <u>characterised in that</u> a safety lamp for the anti-lock system (6) of the trailer, which lamp is already installed in the driver's cab, is used also as the warning device (7).

5. Tractor vehicle according to any one of claims 1 to 4, <u>characterised in that</u> the warning device (7) is activated only when, at the same time, a pressure switch (17) that can be switched on by the supply pressure ($P_V$) or by the braking pressure ($P_H$) of the trailer is also operated.

6. Tractor vehicle according to any one of claims 1 to 4, <u>characterised in that</u> the warning device (7) is activated only when, at the same time, a current measuring relay (20, 21), which is connected into a line (22) that carries current at least on braking, is also activated.

7. Tractor vehicle according to claim 5 or 6, <u>characterised in that</u> the activation of the warning device (7) is effected by means of a connector (5) and a protective plug (16) that is plugged onto the connector (5).

8. Tractor vehicle according to one or more of claims 1 to 7, <u>characterised in that</u> the warning device (7) can be activated automatically by a device (B) for detecting that the connector (5) for the trailer anti-lock system (6) is not plugged.

9. Tractor vehicle according to claim 8, <u>characterised in that</u> the device for detecting that the connector (5) is not plugged is a contact switch (B) installed in the connector (5).

10. Tractor vehicle according to claim 8, characterised in that the device for detecting that the connector (5) is not plugged is a current measuring relay which is connected into a current line leading to the anti-lock system (6) of the trailer.

**Revendications**

1. Tracteur à système antiblocage comportant un dispositif d'avertissement optique et/ou acoustique (7) qui est dispose dans la cabine du conducteur et qui indique qu'au tracteur est accouplée une remorque ou une semi-remorque sans système antiblocage ou avec un système antiblocage (6) défecteux, caractérisé en ce que le dispositif d'avertissement (7) n'est activé que si soit le système antiblocage (19) du tracteur travaille, soit la pression de freinage du tracteur ($P_B$) ou la décélération du tracteur (a) dépasse une valeur prescrite et si, simultanément, est fermé un second interrupteur (11) qui est monté entre le dispositif d'avertissement (7) et les sorties des signaux de régulation et qui soit peut être manoeuvré par le conducteur (F) soit est monté entre le tracteur et la remorque en tant qu'interrupteur à contact ou interrupteur de proximité (B) dans un dispositif d'accouplement (1, 2, 4, 5), le dispositif d'avertissement (7) étant alors automatiquement activé par l'accouplement de la remorque.

2. Tracteur selon la revendication 1, caractérisé en ce que, lorsque le système antiblocage (19) du tracteur émet des signaux de régulation, un relais (15) est mis en circuit.

3. Tracteur selon la revendication 1 et 2, caractérisé en ce que, sous l'action de la pression de freinage du tracteur ($P_B$) ou de la décélération du tracteur (a), est mis en circuit un premier interrupteur (13) monté en parallèle avec le relais (15).

4. Tracteur selon l'une des revendications 1 à 3, caractérisé en ce que, comme dispositif d'avertissement (7) on utilise une lampe témoin, déjà installée dans la cabine du conducteur, pour le système antiblocage (6) de la remorque.

5. Tracteur selon l'une des revendications 1 à 4, caractérisé en ce que le dispositif d'avertissement (7) ne peut être activé que si, simultanément, est en outre manoeuvré un manostat (17) qui peut être mis en circuit par la pression du réservoir ($P_V$) ou par la pression de freinage ($P_H$) de la remorque.

6. Tracteur selon l'une des revendications 1 à 4, caractérisé en ce que le dispositif d'avertissement (7) ne peut être activé que si, simultanément, est en outre activé un relais de mesure d'intensité (20, 21) qui est monté sur un conducteur (22) qui amène le courant au moins en cas de freinage.

7. Tracteur selon la revendication 5 ou 6, caractérisé en ce que l'activation du dispositif d'avertissement (7) se fait par l'intermédiaire d'une fiche de liaison (5) et d'une fiche de protection (16) enfichée sur celle-ci.

8. Tracteur selon une ou plusieurs des revendications 1 à 7, caractérisé en ce que le dispositif d'avertissement (7) peut être automatiquement activé par un dispositif (B) prévu pour reconnaître qu'une fiche de liaison (5) du système antiblocage de la remorque (6) n'est pas enfichée.

9. Tracteur selon la revendication 8, caractérisé en ce que le dispositif prévu pour reconnaître qu'une fiche de liaison (5) n'est pas enfichée est un interrupteur à contact (B) inséré dans la fiche de liaison (5).

10. Tracteur selon la revendication 8, caractérisé en ce que le dispositif prévu pour reconnaître qu'une fiche de liaison (5) n'est pas enfichée est un relais de mesure d'intensité monté sur un conducteur électrique qui rejoint le système antiblocage (6) de la remorque.

MOTORWAGEN    ANHAENGER

FIG. 1

0 043 895

FIG. 2

FIG. 3

FIG. 4